# EUROPÄISCHE PATENTSCHRIFT

(11) **EP 1 922 234 B1**
(45) Veröffentlichungstag und Bekanntmachung des Hinweises auf die Patenterteilung: **05.01.2011**
(21) Anmeldenummer: 06774757.6
(22) Anmeldetag: 31.08.2006
(51) Int. Cl.: B60W 20/00, B60W 10/26, B60W 10/06

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 01.09.2005 AT 14322005; 22.09.2005 AT 15652005; 24.11.2005 AT 19042005; 29.11.2005 AT 19272005
(43) Veröffentlichungstag der Anmeldung: 21.05.2008
(60) Teilanmeldung: 10183868.8
(73) Patentinhaber: AVL List GmbH, 8020 Graz (AT)
(72) Erfinder: PELS, Thomas, 46359 Heiden (DE); KAPUS, Paul, A-8111 Judendorf (AT); EBNER, Peter, A-8042 Graz (AT); FISCHER, Robert, A-8010 Graz (AT); FRAIDL, Günter, A-8020 Graz (AT); KRIEGLER, Wolfgang, A-8051 Graz (AT); KAUP, Carsten, 48653 Coesfeld (DE)
(74) Vertreter: Babeluk, Michael
(86) Internationale Anmeldenummer: PCT/AT2006/000359
(87) Internationale Veröffentlichungsnummer: WO 2007/025319

(56) Entgegenhaltungen:
- EP-A- 1 253 702
- EP-A- 1 522 450
- DE-A1- 4 133 014
- DE-C1- 19 532 325
- US-A1- 2004 163 860

## Beschreibung

Die Erfindung betrifft ein Verfahren zum Betreiben eines Hybridantriebes bei einem Fahrzeug mit einer Brennkraftmaschine und zumindest einer mit dieser verbundenen elektrischen Maschine, welche mit zumindest einem Energiespeicher in Verbindung steht, wobei die Brennkraftmaschine in zumindest einer vorzugsweise außerordentlichen Betriebssituation des Hybridantriebes in einem Überlastmodus betrieben wird, wobei die Brennkraftmaschine im Überlastmodus betrieben wird, wenn - außerhalb des ordentlichen Einsatzbereiches der elektrischen Maschine - die volle Antriebsleistung der im normalen Lastmodus betriebenen Brennkraftmaschine angefordert und zusätzlich Ladeleistung zum Aufladen des Energiespeichers erbracht werden soll.

Aus der JP 2003-041966 A ist ein Steuerungssystem für ein Hybridfahrzeug bekannt, bei dem die Brennkraftmaschine einen Drehmomentausfall der elektrischen Maschine kompensiert, wenn die elektrische Maschine nicht betriebsbereit ist.

Die elektrische Maschine eines Hybridfahrzeuges soll in vielen Fällen durch positives Moment die Fahrleistungen erhöhen (Boost-Funktion). Problematisch ist die Reproduzierbarkeit dieser Funktion, insbesondere für den Fall, dass der Energiespeicher leer ist oder die elektrische Maschine ihre maximale Leistung nicht zur Verfügung stellen kann, zum Beispiel wegen Überhitzung. Bei bekannten Systemen kommt es in solchen Situationen zu Leistungseinbußen des Fahrzeugantriebes, die der Fahrer möglicherweise weder vorhersehen noch nachvollziehen kann.

Die gattungsbildende EP 1 522 450 A2 beschreibt ein Hybridfahrzeug mit einer Brennkraftmaschine, einem elektrischen Antriebsmotors, sowie einem Startermotor, wobei Antriebsmotor und Startermotor als Generator betrieben werden können. In Fahrsituationen, bei denen die Leistungsanforderung kurz über der maximalen Leistung der Brennkraftmaschine liegt, wird zusätzlich zur Brennkraftmaschine der elektrische Antriebsmotor zugeschaltet. Liegt die angeforderte Leistung für längere Zeit über der maximalen Leistung der Brennkraftmaschine, so wird ein Turbolader aktiviert und die Brennkraftmaschine aufgeladen betrieben. Weiters können die elektrischen Motoren in einem Überlastmodus betrieben werden, um zusätzliche Antriebsleistung bereitzustellen.

Aus der DE 195 32 325 C1 ist ein Verfahren zum Betrieb eines Serienhybridantriebes bekannt, der einen Verbrennungsmotor mit mechanisch angekoppelten Generator, einen elektrisch an den Generator ankoppelbaren Antriebselektromotor und einen an den Generator und den Antriebselektromotor ankoppelbaren Energiespeicher beinhaltet, bei dem in einer Betriebsart bei Anforderung einer erhöhten Antriebsleistung der Verbrennungsmotor in einem Betriebszustand erhöhter Leistungsabgabe geführt wird. Dabei wird zum Führen des Verbrennungsmotors in den Betriebszustand erhöhter Leistungsabgabe neben einer entsprechenden Drosselklappen-, Kraftstoff/Luft-Gemisch- und/oder Zündzeitpunkteinstellung ein zusätzliches Mittel eingesetzt, um möglichst rasch die gewünschte Solldrehzahl zu erreichen. Dieses Mittel besteht aus einem Anschleppen des Verbrennungsmotors beim Starten über die normale Startdrehzahl hinaus, einem Zulassen einer temporären maximalen Energiespeicherbelastung, einem Zuführen von Kraftstoff in den Verbrennungsmotor bereits vor Erreichen der normalen Startdrehzahl, einer Verwendung des Antriebselektromotors als Generator und/ oder einer Einstellung eines kontinuierlichen Verbrennungsmotorbetriebs in Bereitschaftsstellung.

Die Auslegung der Brennkraftmaschine erfolgt üblicherweise für den ungünstigsten Lastfall, wenn die volle Antriebsleistung der im normalen Lastmodus betriebenen Brennkraftmaschine angefordert und zusätzlich Ladeleistung zum Aufladen des Energiespeichers erbracht werden soll. Dies hat neben erheblichen Mehrkosten den Nachteil, dass der Hybridantrieb ein relativ hohes Gewicht und großes Volumen aufweist.

Aufgabe der Erfindung ist es, diese Nachteile zu vermeiden und das Gewicht und Volumen des Hybridantriebes zu reduzieren, ohne das Antriebsverhalten eines Hybridfahrzeuges zu verschlechtern.

Erfindungsgemäß wird dies dadurch erreicht, dass der Überlastmodus so ausgelegt wird, dass bei wiederholten Anfahr- und/oder Beschleunigungsvorgängen die verbrauchte und die nachgeladene Energie des elektrischen Speichers gleich sind. Somit ist ein Pendelbetrieb möglich.

Auf diese Weise kann ein ausreichendes Antriebsdrehmoment zur Verfügung gestellt werden und gleichzeitig der leere Energiespeicher nachgeladen werden.

Vorzugsweise ist vorgesehen, dass die Brennkraftmaschine im Überlastmodus betrieben wird, wenn der Ladezustand des Energiespeichers unter einen Mindestwert fällt und/oder die abgefragte Leistung größer ist als die Summe der Antriebsleistungen der Brennkraftmaschine und der elektrischen Maschine.

Besonders in Gefahrensituationen kann durch temporären Überlastbetrieb der Brennkraftmaschine ein ausreichend hohes Drehmoment zur Verfügung gestellt werden, um kritische Situationen zu überwinden.

Die Brennkraftmaschine wird im Überlastbetrieb ohne Rücksicht auf Emissionen und Dauerhaltbarkeit "überlastet" betrieben. Dies geschieht durch größere Einspritzmengen, geänderten Zündzeitpunkt, erhöhten Ladedruck, etc..

Durch zusätzliches Anfetten des Gemisches und/oder durch Erhöhen des Ladedruckes der aufgeladenen Brennkraftmaschine und/oder durch Verstellen der Steuerzeiten, bzw. des Hubes der Gaswechselventile kann diese im Überlastmodus betrieben werden.

Eine Lastpunktverschiebung kann über das Getriebe erfolgen, welches beispielsweise als Handschaltgetriebe oder Doppelkupplungsgetriebe ausgeführt sein kann. Dabei kann beispielsweise die Übersetzung im letzten Gang bei 40-55 km/h für 1000min⁻¹ Motordrehzahl ausgelegt sein.

Alternativ dazu kann eine Lastpunktverschiebung auch durch Belasten der elektrischen Maschine oder Unterstützen der Brennkraftmaschine durch die elektrische Maschine erreicht werden.

Während des sogenannten "Turbolochs" kann die elektrische Maschine unterstützend betrieben werden, um in dieser Phase Leistungseinbußen zu kompensieren.

Wird das Fahrzeug nur elektrisch durch die elektrische Maschine angetrieben, so ist es vorteilhaft, die Brennkraftmaschine vom Antriebsstrang durch eine Kupplung zu trennen, um Schleppverluste zu vermeiden.

Es ist aber auch möglich, die Reibleistung der geschleppten Brennkraftmaschine durch Verstellen der Steuerzeiten, Änderung des Ventilhubes oder Ventilabschaltung zu vermindern.

Für schnelle Nachladevorgänge eignen sich Doppelschichtkondensatoren am besten. Für normale Hybridfunktionen können dagegen aufladbare Batterien als Energiespeicher eingesetzt werden. Besonders günstig ist es, wenn - je nach Anforderungen - verschiedene Energiespeicher, also sowohl Doppelschichtkondensatoren als auch Batterien verwendet werden.

Die Erfindung wird im Folgenden anhand der Figuren näher erläutert. Es zeigen:
- Fig. 1: ein Drehmoment-Drehzahl-Diagramm und
- Fig. 2: schematisch einen Hybridantrieb zur Durchführung des erfindungs- gemäßen Verfahrens.

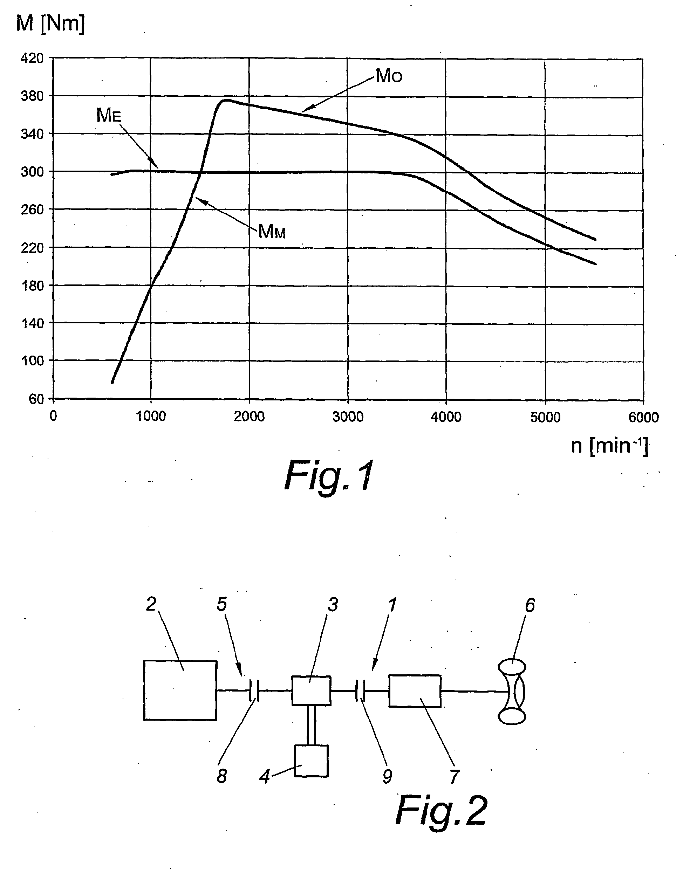

Die Fig. 1 zeigt ein Diagramm, in welchem das Drehmoment M über der Motordrehzahl n aufgetragen ist. Mit M_{E} ist das Drehmoment der elektrischen Maschine 3 und M_{M} das Drehmoment der Brennkraftmaschine 2 bezeichnet. Der mit M_{O} bezeichnete Teil der Drehmomentenkennlinie der Brennkraftmaschine 2 zeigt den Überlastbereich.

Zur Realisierung eignet sich ein einfacher Hybridantrieb 1 (sogenannter Mild-Hybrid) mit einer Brennkraftmaschine 2 und einer elektrischen Maschine 3, welche mit einem Energiespeicher 4 verbunden ist. Die elektrische Maschine 3 ist mit der Kurbelwelle 5 der Brennkraftmaschine mechanisch verbunden. Im Antriebsstrang zu den Antriebsrädern 6 ist ein beispielsweise ein als Handschaltgetriebe oder Doppelkupplungsgetriebe ausgebildetes Getriebe 7 angeordnet. Die Kupplung 8 kann zwischen Brennkraftmaschine 2 und elektrischer Maschine 3 angeordnet sein. Es können auch zwei Kupplung 8, 9 verbaut werde.

Im Ausführungsbeispiel unterstützt unterhalb einer Drehzahl von 1500 min⁻¹ die elektrische Maschine 3 die Brennkraftmaschine 2, so dass das Antriebsdrehmoment sich als Summe des Drehmomentes M_{M} der Brennkraftmaschine 2 und das Drehmoment M_{E} der elektrischen Maschine 3 ergibt. Über 1500 min⁻¹ wird das Antriebsdrehmoment nur durch die Brennkraftmaschine 2 aufgebracht. Dabei wird immer das gleiche Drehmoment dem Fahrer zur Verfügung gestellt. Bei leerem Energiespeicher 4 wird die Brennkraftmaschine im Überlastmodus betrieben. Der Energiespeicher wird geladen und trotzdem wird das Nennvolllastdrehmoment an die Abtriebswelle abgegeben.

Wenn der elektrische Energiespeicher 4 beispielsweise nach einige Anfahrvorgängen entleert ist, ist es möglich, oberhalb von 1500 min⁻¹ das Drehmoment M_{M} der Brennkraftmaschine 2 so weit zu erhöhen, dass ein Laden des elektrischen Energiespeichers 4 möglich ist, obwohl zum Antreiben des Fahrzeuges noch immer ein Drehmoment von etwa 300 Nm zur Verfügung steht. Dies wird erreicht, indem die Brennkraftmaschine 2 beispielsweise durch Erhöhen des Ladedruckes und leichtes Anfetten im Überlastmodus betrieben wird. Die Überlastung kann beispielsweise auch durch Ändern der Steuerzeiten und/oder des Ventilhubes der Gaswechselventile erfolgen. Auch eine Kombination mehrerer Maßnahmen ist möglich.

Eine beispielhafte kritische Situation ist das Anfahren am Berg mit einer Drehzahl, die nur leicht über der Leerlaufdrehzahl liegt (z.B. 1250 min⁻¹). Das Höherschalten auf den nächsten Gang findet beispielsweise bei 2000 min⁻¹ statt. Im Betriebsbereich von 1250 min⁻¹ bis 1500 min⁻¹ wird Energie aus dem Energiespeicher 4 entnommen, die elektrische Maschine 3 liefert Drehmoment. Im Betriebsbereich zwischen 1500 min⁻¹ bis 2000 min⁻¹ wird die Brennkraftmaschine 2 im Überlastmodus (bei leerem Energiespeicher 4) betrieben. Das Drehmoment M, das über dem Normdrehmoment (im Beispiel 300 Nm) liegt, wird zum Nachladen des Energiespeichers 4 verwendet. Dabei ist es wünschenswert, dass bei möglichst niedriger Drehzahl n mit Nennleistung der elektrischen Maschine 3 in den Energiespeicher 4 zurückgeladen werden kann.

Ziel des Betriebs ist es, dass die Energie, die unter 1500 min⁻¹ benötigt wird, im Betrieb oberhalb von 1500 min⁻¹ bis zur Schaltdrehzahl (Worst-Case-Bedingung: niedrige Schaltdrehzahl) nachgeladen werden kann. Die Überlastenergie muss dabei das Nachladen des Energiespeichers 4 und den Wirkungsgrad des Nachladens bei möglichst niedriger Drehzahl n abdecken.

Das bedeutet für die Brennkraftmaschine im Gegensatz zu bisherigen Hybridkonzepten: Das maximale Drehmoment (Crossover zwischen Verbrauchen und Nachladen) muss bei möglichst niedrigen Drehzahlen n stattfinden. Bei bekannten Hybridkonzepten wird in vielen Fällen eine besonders kostengünstige Brennkraftmaschine, bzw. eine Brennkraftmaschine, die eher auf niedrigsten Verbrauch, als auf bestes Drehmoment ausgelegt ist, verwendet.

Zum Unterschied zu herkömmlichen Hybridkonzepten erlaubt beim erfindungsgemäßen Hybridantrieb die aufgeladene Brennkraftmaschine 2, welche ein hohes Drehmoment bei niedrigen Drehzahlen aufweist, ein Hybridkonzept ohne Leistungsverzweigung (Power Split). Die Lastpunktverschiebung erfolgt nicht hauptsächlich über Leistungsverzweigung zwischen elektrischer Maschine 3 und Brennkraftmaschine 2, sondern über ein Getriebe mit langer Endübersetzung. Es ist somit kein leistungsverzweigtes Getriebe und damit verbundenen hohen Entwicklungs- und Investitionskosten erforderlich. Gleichzeitig ist das hier beschriebene Konzept auch als Zusatzfunktion für existierende Getriebe einsetzbar. Eine geringfügige zusätzliche Lastpunktverschiebung ist trotzdem möglich. Dadurch lassen sich Kosten wesentlich reduzieren.

Die elektrische Maschine 3 lässt sich wie folgt einsetzen:
- Lastpunktverschiebung: Die elektrische Maschine 3 kann - bei Energiespeicher 4 mit ausreichender Energie - unterstützend, oder - bei leerem, bzw. ladbarem Energiespeicher - belastend eingesetzt werden, um die Brennkraftmaschine in den optimalen Betriebspunkt zu schieben (Minimalverbrauchspunkt).
- Transientunterstützung: Die elektrische Maschine 3 kann zur Überbrückung des sogenannten "Turbolochs" eingesetzt werden. Während der Zeitdauer des Laderhochlaufes kann mittels der elektrischen Maschine 3 ein linearer Drehmomentaufbau gewährleistet werden.
- Elektrisch Fahren: Bei ausreichend geladenem elektrischen Energiespeicher 4 kann rein elektrisch gefahren werden. Bei starrer Verbindung zwischen der elektrischen Maschine 3 und der Brennkraftmaschine 2 wird die elektrische Maschine 3 so bestromt, dass die Drehungleichförmigkeit der mitgeschleppten Brennkraftmaschine 2 ausgeglichen wird. Die Brennkraftmaschine 2 wird in einem reibleistungsminimierten Modus betrieben. Bei Verwendung einer Kupplung 8 zwischen elektrischer Maschine 3 und Brennkraftmaschine 2 kann bei abgekoppelter Brennkraftmaschine 2 elektrisch gefahren werden.

Der Energiespeicher 4 kann aus Doppelschichtkondensatoren (Supercaps) und/ oder herkömmlichen aufladbaren Batterien bestehen. Doppelschichtkondensatoren eignen sich besonders für schnelles Nachladen, für den elektrischen Fahrbetrieb können aufladbare Batterien verwendet werden. Im Gesamtkonzept können daher auch zwei unterschiedliche Energiespeicher eingesetzt werden.

Das erfindungsgemäße Verfahren ist nicht auf bestimmte Arten und Anordnungen von Hybridantriebskonzepten beschränkt, sondern kann vielmehr bei verschiedensten Hybridantrieben eingesetzt werden.

## Patentansprüche

1. Verfahren zum Betreiben eines Hybridantriebes (1) bei einem Fahrzeug mit einer Brennkraftmaschine (2) und zumindest einer mit dieser verbundenen elektrischen Maschine (3), welche mit zumindest einem Energiespeicher (4) in Verbindung steht, wobei die Brennkraftmaschine (2) in zumindest einer vorzugsweise außerordentlichen Betriebssituation des Hybridantriebes (1) in einem Überlastmodus betrieben wird, wobei die Brennkraftmaschine (2) im Überlastmodus betrieben wird, wenn - außerhalb des ordentlichen Einsatzbereiches der elektrischen Maschine (3) - die volle Antriebsleistung der im normalen Lastmodus betriebenen Brennkraftmaschine (2) angefordert und zusätzlich Ladeleistung zum Aufladen des Energiespeichers (4) erbracht werden soll, **dadurch gekennzeichnet, dass** der Überlastmodus so ausgelegt wird, dass bei wiederholten Anfahr- und/oder Beschleunigungsvorgängen die verbrauchte und die nachgeladene Energie des elektrischen Speichers (4) gleich sind.

2. Verfahren nach Anspruch 1, **dadurch gekennzeichnet, dass** die Brennkraftmaschine (2) im Überlastmodus betrieben wird, wenn der Ladezustand des Energiespeichers (4) unter einen Mindestwert fällt und die abgefragte Leistung größer ist als die Summe der Antriebsleistungen der Brennkraftmaschine (2) und der elektrischen Maschine (3).

3. Verfahren nach Anspruch 1 oder 2, **dadurch gekennzeichnet, dass** der Überlastbetrieb der Brennkraftmaschine (2) durch zusätzliches Anfetten des Kraftstoff-Luft-Gemisches realisiert wird.

4. Verfahren nach einem der Ansprüche 1 bis 3, **dadurch gekennzeichnet, dass** der Überlastbetrieb der aufgeladenen Brennkraftmaschine (2) durch Erhöhen des Ladedruckes realisiert wird.

5. Verfahren nach einem der Ansprüche 1 bis 4, **dadurch gekennzeichnet, dass** der Überlastbetrieb durch Verstellen der Steuerzeiten und/oder Verstellen des Hubes der Gaswechselventile realisiert wird.

6. Verfahren nach einem der Ansprüche 1 bis 5, **dadurch gekennzeichnet, dass** bei schnellen Ladevorgängen die elektrische Energie in zumindest einem Doppelschichtkondensator gespeichert wird.

7. Verfahren nach einem der Ansprüche 1 bis 6, **dadurch gekennzeichnet, dass** als Energiespeicher (4) sowohl zumindest ein Doppelschichtkondensator, als auch zumindest eine aufladbare Batterie eingesetzt werden kann, wobei im normalen elektrischen Fahrbetrieb die aufladbare Batterie entladen und geladen wird und bei schnellen Hochlade- und/oder Entladevorgängen der Doppelschichtkondensator verwendet wird.

8. Verfahren nach einem der Ansprüche 1 bis 7, **dadurch gekennzeichnet, dass** eine Lastpunktverschiebung über ein im Antriebsstrang angeordnetes Getriebe (7) durchgeführt wird.

9. Verfahren nach einem der Ansprüche 1 bis 8, **dadurch gekennzeichnet, dass** eine Lastpunktverschiebung durch Belasten der elektrischen Maschine (3) oder Unterstützen durch die elektrische Maschine (3) durchgeführt wird.

10. Verfahren nach einem der Ansprüche 1 bis 9, **dadurch gekennzeichnet, dass** die elektrische Maschine (3) unterstützend zur Überbrückung des Turbolochs eingesetzt wird.

11. Verfahren nach einem der Ansprüche 1 bis 10, **dadurch gekennzeichnet, dass** das Fahrzeug zumindest in einem Betriebsbereich nur elektrisch durch die elektrische Maschine (3) angetrieben wird.

12. Verfahren nach Anspruch 11, **dadurch gekennzeichnet, dass** die Brennkraftmaschine (2) durch zumindest eine Kupplung während des elektrischen Betriebes vom Antriebsstrang getrennt wird.

13. Verfahren nach Anspruch 11, **dadurch gekennzeichnet, dass** die Brennkraftmaschine (2) während des elektrischen Betriebes im Schleppbetrieb mit verminderter Reibleistung betrieben wird.

14. Hybridantrieb (1) für ein Fahrzeug zur Durchführung des Verfahrens nach einem der Ansprüche 1 bis 13, mit einer vorzugsweise aufgeladenen Brennkraftmaschine (2), zumindest einer elektrischen Maschine (3), zumindest einem mit der elektrischen Maschine (3) verbundenen elektrischen Energiespeicher (4) und einem Getriebe (7) im Antriebsstrang, wobei die Brennkraftmaschine (2) in zumindest einer vorzugsweise außerordentlichen Betriebssituation des Hybridantriebes in einem Überlastmodus betreibbar ist, **dadurch gekennzeichnet, dass** die Steuerzeit und/oder der Ventilhub zumindest eines Gaswechselventils verstellbar ist.

15. Hybridantrieb (1) nach Anspruch 14, **dadurch gekennzeichnet, dass** im Antriebsstrang zwischen Brennkraftmaschine (2) und elektrischer Maschine (3) und/oder zwischen elektrischer Maschine (3) und Getriebe (7) zumindest eine Kupplung (8, 9) angeordnet ist.

## Claims

1. A method for operating a hybrid drive (1) in a vehicle with an internal combustion engine (2) and at least one electric machine (3) connected thereto which is in connection with at least one energy storage device (4), with the internal combustion engine (2) being operated in overload mode in at least one preferably exceptional operating situation of the hybrid drive (1), with the internal combustion engine (2) being operated in overload mode when, outside of the proper application area of the electric machine (3), the full drive power of the internal combustion engine (2) which is operated in normal load mode is demanded and additionally charge power for charging the energy storage device (4) is to be provided, **characterised in that** the overload mode is configured in such a way that after repeated starting and/or acceleration processes the consumed or recharged energy of the electric storage device (4) are equal.

2. A method according to claim 1, **characterised in that** the internal combustion engine (2) is operated in overload mode when the charging state of the energy storage device (4) falls under a minimum value and the demanded power is higher than the sum total of the driving powers of the internal combustion engine (2) and the electric machine (3).

3. A method according to claim 1 or 2, **characterised in that** the overload operation of the internal combustion engine (2) is realized by additional enrichment of the fuel-air mixture.

4. A method according to one of the claims 1 to 3, **characterised in that** the overload operation of the charged internal combustion engine (2) is realized by increasing the boost pressure.

5. A method according to one of the claims 1 to 4, **characterised in that** the overload operation is realized by adjusting the control times and/or adjusting the stroke of the charge-changing valves.

6. A method according to one of the claims 1 to 5, **characterised in that** in the case of rapid charging processes the electric energy is stored in at least one double-layer capacitor.

7. A method according to one of the claims 1 to 6, **characterised in that** both at least one double-layer capacitor as well as at least one chargeable battery can be used as an energy storage device (4), with the chargeable battery being discharged and charged in normal electric driving operation and the double-layer capacitor is used in rapid high loading and/or discharging processes of the double-layer capacitor.

8. A method according to one of the claims 1 to 7, **characterised in that** a displacement of the load point is made via a transmission (7) arranged in the drive train.

9. A method according to one of the claims 1 to 8, **characterised in that** a load point displacement is performed by loading the electric machine (3) or by support by the electric machine (3).

10. A method according to one of the claims 1 to 9, **characterised in that** the electric machine (3) is used in a supportive manner to bridge the turbo lag.

11. A method according to one of the claims 1 to 10, **characterised in that** the vehicle is driven in at least one operating range only electrically by the electric machine (3).

12. A method according to claim 11, **characterised in that** the internal combustion engine (2) is separated from the drive train during electric operation by at least one clutch.

13. A method according to claim 11, **characterised in that** during electric operation the internal combustion engine (2) is operated with reduced frictional power in dragged operation.

14. A hybrid drive (1) for a vehicle for performing the method according to one of the claims 1 to 13, comprising a preferably charged internal combustion engine (2), at least one electric machine (3), at least one electric energy storage device (4) connected with the electric machine (3), and a transmission (7) in the drive train, wherein the internal combustion engine (2) can be operated in an overload mode in at least one preferably extraordinary operating situation of the hybrid drive, **characterised in that** the control time and/or the valve stroke of at least one charge-changing valve is adjustable.

15. A hybrid drive (1) according to claim 14, **characterised in that** at least one clutch (8, 9) is arranged in the drive train between internal combustion engine (2) and electric machine (3) and/or between electric machine (3) and transmission (7).

## Revendications

1. Procédé de gestion d'un entraînement hybride (1) d'un véhicule équipé d'un moteur thermique (2) et d'au moins un moteur électrique (3) relié à celui-ci et coopérant avec au moins un accumulateur d'énergie (4),
- le moteur thermique (2) fonctionnant en mode de surcharge au moins dans une situation de fonctionnement de préférence exceptionnelle de l'entraînement hybride (1),
- le moteur thermique (2) fonctionnant en mode de surcharge si (en dehors de la plage d'utilisation habituelle du moteur électrique (3)) toute la puissance motrice est demandée au moteur thermique (2) fonctionnant en mode normal de charge et s'il faut fournir une puissance de charge supplémentaire pour charger l'accumulateur d'énergie (4),
procédé **caractérisé en ce que**
le mode de fonctionnement en surcharge est conçu pour que dans des phases répétées de démarrage et/ou d'accélération, l'énergie consommée et l'énergie rechargée de l'accumulateur électrique (4) sont égales.

2. Procédé selon la revendication 1,
**caractérisé en ce que**
le moteur thermique (2) fonctionne en mode de surcharge si l'état de charge de l'accumulateur d'énergie (4) descend en dessous d'une valeur minimale et si la puissance demandée est supérieure à la somme des puissances motrices du moteur thermique (2) et du moteur électrique (3).

3. Procédé selon la revendication 1 ou 2,
**caractérisé en ce qu'**
on réalise le mode de fonctionnement en surcharge du moteur thermique (2) par un enrichissement supplémentaire du mélange carburant/air.

4. Procédé selon l'une des revendications 1 à 3,
**caractérisé en ce qu'**
on réalise le mode de fonctionnement en surcharge du moteur thermique (2), suralimenté, en augmentant la pression de suralimentation.

5. Procédé selon l'une des revendications 1 à 4,
**caractérisé en ce qu'**
on réalise le mode de fonctionnement en surcharge en réglant les durées de commande et/ou en réglant la course des soupapes d'échange de gaz.

6. Procédé selon l'une des revendications 1 à 5,
**caractérisé en ce que**
pour des opérations de charge rapide, l'énergie électrique est stockée dans au moins un condensateur à double couche.

7. Procédé l'une des revendications 1 à 6,
**caractérisé en ce que**
on utilise à la fois au moins un condensateur à double couche et au moins une batterie rechargeable comme accumulateur d'énergie (4),
et en mode de roulage électrique, normal, on charge et on décharge la batterie rechargeable et elle est utilisée pour des opérations de recharge et/ou de décharge rapide du condensateur à double couche.

8. Procédé l'une des revendications 1 à 7,
**caractérisé en ce qu'**
on déplace le point de charge par une transmission (7) dans la ligne d'entraînement.

9. Procédé l'une des revendications 1 à 8,
**caractérisé en ce qu'**
on déplace le point de charge en sollicitant le moteur électrique (3) ou en assurant l'assistance par le moteur électrique (3).

10. Procédé l'une des revendications 1 à 9,
**caractérisé en ce qu'**
on utilise le moteur électrique (3) en assistance pour passer le trou du turbo.

11. Procédé selon l'une des revendications 1 à 10,
**caractérisé en ce qu'**
au moins dans une plage de fonctionnement on entraîne le véhicule seulement électriquement par le moteur électrique (3).

12. Procédé selon la revendication 11,
**caractérisé en ce qu'**
on sépare le moteur thermique (2) par au moins un embrayage pendant le fonctionnement électrique de la ligne d'entraînement.

13. Procédé selon la revendication 11,
**caractérisé en ce que**
pendant le mode de fonctionnement électrique, on fait fonctionner le moteur thermique (2) en mode de traction avec une puissance de friction réduite.

14. Entraînement hybride (1) de véhicule pour la mise en oeuvre du procédé selon l'une des revendications 1 à 13, comportant un moteur thermique (2) de préférence avec suralimentation, au moins un moteur électrique (3), au moins un accumulateur d'énergie électrique (4) relié au moteur électrique (3) et une transmission (7) dans la ligne de transmission,
- le moteur thermique (2) fonctionnant dans au moins une situation de fonctionnement, de préférence exceptionnelle, de l'entraînement hybride en mode de surcharge,
entraînement hybride **caractérisé en ce que**
la durée de commande et/ou la course d'au moins une soupape d'échange de gaz sont réglables.

15. Entraînement hybride (1) selon la revendication 14,
**caractérisé en ce que**
la ligne de transmission entre le moteur thermique (2) et le moteur électrique (3) et/ou entre le moteur électrique (3) et la transmission (4) comporte au moins un embrayage (8, 9).
